# EUROPÄISCHE PATENTSCHRIFT

(11) **EP 2 300 285 B1**
(45) Veröffentlichungstag und Bekanntmachung des Hinweises auf die Patenterteilung: **04.04.2012**
(21) Anmeldenummer: 09749718.4
(22) Anmeldetag: 06.05.2009
(51) Int. Cl.: B60S 1/58

(54) **SCHEIBENWISCHERANTRIEB SOWIE KRAFTFAHRZEUG MIT SCHEIBENWISCHERANTRIEB**
WINDSHIELD WIPER DRIVE AND MOTOR VEHICLE HAVING A WINDSHIELD WIPER DRIVE
MÉCANISME D'ENTRAÎNEMENT D'ESSUIE-GLACE ET VÉHICULE AUTOMOBILE MUNI D'UN MÉCANISME D'ENTRAÎNEMENT D'ESSUIE-GLACE

(30) Priorität: 21.05.2008 DE 102008001937
(43) Veröffentlichungstag der Anmeldung: 30.03.2011
(73) Patentinhaber: Robert Bosch GmbH, 70442 Stuttgart (DE)
(72) Erfinder: BOHN, Roland, 77815 Buehl (DE); HUESGES, Mario, 77830 Buehlertal (DE); STERNS, Orlando, 76131 Karlsruhe (DE)
(86) Internationale Anmeldenummer: PCT/EP2009/055470
(87) Internationale Veröffentlichungsnummer: WO 2009/141228

(56) Entgegenhaltungen:
- WO-A1-96/04156
- JP-A- 2001 225 726

## Beschreibung

### Stand der Technik

Die Erfindung betrifft einen Scheibenwischerantrieb, insbesondere einen Kraftfahrzeugheckscheibenwischerantrieb, gemäß dem Oberbegriff des Anspruch 1 sowie ein Kraftfahrzeug mit einem Scheibenwischerantrieb gemäß Anspruch 9.

Bei bekannten Heckscheibenwischerantrieben weist das Getriebegehäuse üblicherweise einen Abtriebsdom auf, der eine Heckscheibe oder die Fahrzeugkarosserie durchsetzt, wobei der Abtriebsdom selbst wiederum von der Wischerwelle durchsetzt ist. Zum Festlegen des Scheibenwischerantriebs an der Heckscheibe bzw. der Fahrzeugkarosserie ist endseitig am Abtriebsdom ein Außengewinde vorgesehen, das zur Aufnahme einer Mutter dient, mit der das Getriebegehäuse durch Verspannen an der Heckscheibe bzw. der Fahrzeugkarosserie festlegbar ist. Die Abdichtung zwischen der Wischerwelle und der Durchgangsöffnung im Abtriebsdom erfolgt über eine Ringdichtung, die in einem Bereich radial zwischen der Wischerwelle und dem Innenumfang des Abtriebsdoms aufgenommen ist. Um den Wischerwellenaustrittsbereich zusätzlich vor direkter Wasserbeaufschlagung zu schützen, ist es bekannt, eine Schutzkappe aus einem thermoplastischen Material über die Wischerwelle und die Mutter zu schieben, wobei gemäß einer ersten bekannten Variante die Schutzkappe relativ zur Wischerwelle feststehend und gemäß einer zweiten bekannten Variante die Schutzkappe mit der Wischerwelle mitdrehend angeordnet ist. Nachteilig bei beiden Varianten ist es, dass Wasser, insbesondere Salz- und Schmutzwasser, durch Verwirbelungen in den von der Schutzkappe umschlossenen Bereich eindringen und somit zwangsläufig nach einem gewissen Zeitraum an der Ringdichtung auch in den Gehäuseinnenraum vordringen kann. Insbesondere bei einer feststehenden Schutzkappe unterliegt diese an der Schnittstelle zur Wischerwelle einem unvermeidlichen Verschleiß, welcher dann zwangsläufig über die Lebensdauer zu zusätzlichen Undichtigkeiten führt. Bei mitdrehender Schutzkappe muss der Spalt zwischen der Mutter und der Schutzkappe so groß gewählt werden, dass die Schutzkappe ohne zu streifen relativ zur Mutter drehen kann, wobei dann noch leichter verwirbeltes Wasser in den von der Schutzkappe umschlossenen Raum eindringen kann. Zwar kann das Wasser in diesem Fall vergleichsweise leicht wieder aus dem Bereich innerhalb der Schutzkammer abfließen - es verbleiben nach Abtrocknung jedoch noch Reststoffe, wie Sand, Staub, Salz, etc. in einem Bereich unterhalb der Schutzkappe, wodurch der Spalt über die Lebensdauer immer kleiner wird oder teilweise sogar vollständig verschlossen wird. Spätestens dann kann das eingedrungene Wasser nicht oder nur noch unvollständig abfließen und daher zu dem Ringdichtelement zwischen der Wischerwelle und dem Innenumfang des Abtriebsdoms vordringen und zum vorzeitigen Verschleiß des Dichtelementes führen, was in der Folge zum Eindringen von Wasser in den Gehäuseinnenraum führt.

Die Offenlegungsschrift JP 2001 225 726 A zeigt einen Kraftfahrzeugheckscheibenwischerantrieb mit einer Schutzkappe aus Kunststoff.

Die Offenlegungsschrift WO 96/ 04156 A zeigt eine Führungsvorrichtung für eine Antriebswelle.

### Offenbarung der Erfindung Technische Aufgabe

Der Erfindung liegt die Aufgabe zugrunde, einen Scheibenwischerantrieb vorzuschlagen, bei dem die Gefahr des Eindringens von Wasser in das Gehäuseinnere minimiert ist. Ferner besteht die Aufgabe darin, ein Kraftfahrzeug mit einem entsprechend optimierten Scheibenwischerantrieb vorzuschlagen.

### Technische Lösung

Diese Aufgabe wird hinsichtlich des Scheibenwischerantriebs mit den Merkmalen des Anspruchs 1 und hinsichtlich des Kraftfahrzeugs mit den Merkmalen des Anspruchs 9 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, die Schutzkappe nicht wie im Stand der Technik als starres Bauteil, sondern als elastisches Dichtelement aus einem Elastomermaterial, vorzugsweise einer Gummimischung, auszubilden, so dass die Schutzkappe nicht nur wie im Stand der Technik eine Art Regenschirmfunktion hat, sondern stattdessen unmittelbar selbst dichtend mit mindestens einem an die Schutzkappe angrenzenden Bauteil des Scheibenwischerantriebs und/oder des Kraftfahrzeugs zusammenwirken kann um den Bereich unterhalb der Schutzkappe optimal vor einem Wassereintritt zu schützen. Besonders bevorzugt ist es dabei, wenn die Schutzkappe, beispielsweise durch ihre elastische Ausbildung und/oder eine formschlüssige Anordnung in Richtung des mindestens einen angrenzenden Bauteils kraftbeaufschlagt ist, um somit die Dichtwirkung zu optimieren. Durch die Ausbildung der Schutzkappe aus einem Elastomermaterial kann der Wassereintritt bei entsprechender Anordnung der Schutzkappe in den Bereich unterhalb der Schutzkappe vollständig vermieden werden, so dass in der Folge auch ein Vordringen von Wasser in einen Bereich radial zwischen der Wischerwelle und dem Innenumfang des Abtriebsdom verhindert wird. Dies wiederum führt dazu, dass geringere Anforderungen an eine ggfs. zwischen dem Abtriebsdom und der Wischerwelle angeordnete Ringdichtung gestellt werden können - ggfs. kann sogar auf eine derartige Ringdichtung verzichtet werden. Insgesamt wird die Lebensdauer durch das Vorsehen einer Schutzkappe aus einem Elastomermaterial im Vergleich zu bekannten Scheibenwischerantrieben erhöht.

In Weiterbildung der Erfindung ist mit Vorteil vorgesehen, dass die Schutzkappe dichtend an der Wischerwelle anliegt. Hierzu ist es bevorzugt, wenn die Schutzkappe bzw. die von der Wischerwelle durchsetzte Öffnung der Schutzkappe aufgrund des Wischerwellendurchmessers (etwas) gedehnt ist, um die Wischerwelle zu klemmen und dadurch die Dichtwirkung zu erhöhen.

Eine optimale Dichtwirkung der Schutzkappe kann erzielt werden, wenn in einem Bereich radial zwischen der Schutzkappe und der Wischerwelle eine Fettkammer gebildet ist. Durch die Aufnahme eines Fettpolsters radial zwischen der Schutzkappe und der Wischerwelle wird zum einen die Reibung während des Betriebs und damit der Verschleiß minimiert. Zum anderen wird die Dichtwirkung aufgrund der hydrophoben Eigenschaft von Fett noch weiter verbessert. Konstruktiv überraschend einfach lässt sich eine Fettkammer dadurch realisieren, dass die Schutzkappe mindestens zwei in axialer Richtung beabstandete Dichtlippen aufweist, die in einem axialen Zwischenbereich die Fettkammer in beide Axialrichtungen begrenzen. Anders ausgedrückt wird durch das Vorsehen von mindestens zwei in axialer Richtung beabstandeten, an der Wischerwelle anliegenden, Dichtlippen eine die Fettkammer bildende Ringnut am Rand der von der Wischerwelle durchsetzten Öffnung der Schutzkappe gebildet.

Zusätzlich oder alternativ zu einer dichtenden Anlage der Schutzkappe an der Wischerwelle ist eine Ausführungsform realisierbar, bei der die Schutzkappe, vorzugsweise mittels mindestens einer an dieser ausgebildeten Dichtlippe, dichtend an der von der Mutter kraftbeaufschlagten Anlagescheibe anliegt. Zusätzlich oder alternativ zur dichten Anlage der Schutzkappe an der Anlagescheibe ist eine Ausführungsform realisierbar, bei der die Schutzkappe dichtend an der von dem Abtriebsdom durchsetzten Heckscheibe oder der von dem Abtriebsdom durchsetzten Fahrzeugkarosserie eines mit einem Scheibenwischerantrieb ausgestatteten Kraftfahrzeugs dichtend anliegt.

Von besonderem Vorteil ist eine Ausführungsform, bei der die Schutzkappe in ihrer Dichtposition formschlüssig an mindestens einem Bauteil des Scheibenwischerantriebs gehalten ist, um zum einen ein unbeabsichtigtes Abziehen der Schutzkappe von dem restlichen Scheibenwischerantrieb zu verhindern und zum anderen um die Schutzkappe in einer definierten Dichtposition zu halten.

Eine Möglichkeit zur Ausbildung einer formschlüssigen Fixierung der Schutzkappe besteht darin, dass die Schutzkappe die Mutter hintergreifend angeordnet ist. Um hierfür einen ausreichend großen Raum (Hinterschnitt) bereitzustellen, ist eine Ausführungsform bevorzugt, bei der in der Anlagefläche, vorzugsweise stirnseitig, eine Ringnut eingebracht ist, die sich von radial außerhalb der Mutter bis in einen Bereich nach radial innen erstreckt, in dem sich die Ringnut in axialer Richtung benachbart, d.h. unterhalb der Mutter befindet. In diesen axial unterhalb der Mutter gelegenen Bereich greift dann die Schutzkappe mit einem Fixierabschnitt (Rastabschnitt) ein. Zu Montagezwecken kann die Schutzkappe in axialer Richtung über die Mutter aufgeschoben und in den Hinterschnitt geklipst werden. Vorzugsweise ist zur zusätzlichen Abdichtung eine mit Radialabstand zu dem Hinterschnitt angeordnete flexible Dichtlippe an der Schutzkappe ausgebildet, mit der die Schutzkappe an der Anlagescheibe und/oder der Fahrzeugkarosserie und/oder einer Heckscheibe dichtend anliegt. Die beschriebene Formschlusslösung ist insbesondere deshalb von großem Vorteil, da auf separate Bauteile zum Herstellen der formschlüssigen Verbindung zu dem restlichen Scheibenwischerantrieb verzichtet werden kann.

Insbesondere dann, wenn auf eine zuvor beschriebene abschnittsweise Aufnahme der Schutzkappe in einer Ringnut der Anlagescheibe verzichtet werden soll, ist eine Ausführungsform bevorzugt, bei der die Schutzkappe mit einem Befestigungsbauteil formschlüssig gehalten ist, welches klemmend zwischen der Mutter und der Anlagescheibe aufgenommen ist. Bei einem derartigen Befestigungsteil handelt es sich bevorzugt um ein, insbesondere ringförmiges, Blechbiegeteil. Bei der Montage wird die Schutzkappe über den Außendurchmesser des Befestigungsteils geschoben, die Abdichtung des Befestigungsbauteils relativ zur Anlagescheibe erfolgt durch die Realisierung einer Presspassung zwischen dem Befestigungsbauteil und der Anlagescheibe.

Zur weiteren Erhöhung der Dichtqualität kann an einer Anlagefläche der Elastomer-Schutzkappe ein umlaufender flexibler Dichtrand (Dichtlippe) vorgesehen werden, mit der die Schutzkappe an der Anlagescheibe und/oder der Fahrzeugkarosserie und/oder einer Heckscheibe dichtend anliegt. Durch eine entsprechende Formgebung der Schutzkappe kann gewährleistet werden, dass sich der Dichtrand bei der Montage in radialer Richtung nach Außen umlegt, um optimale Dichtverhältnisse herstellen zu können.

Die Erfindung führt auch auf ein Kraftfahrzeug mit einem zuvor beschriebenen Scheibenwischerantrieb. Bevorzugt handelt es sich bei dem Scheibenwischerantrieb um einen Kraftfahrzeugheckscheibenwischerantrieb. Dabei durchsetzt der Abtriebsdom des Gehäuses des Scheibenwischerantriebs, bei dem es sich vorzugsweise um ein Getriebegehäuse des Scheibenwischerantriebs handelt, eine Durchgangsöffnung in der Fahrzeugkarosserie oder in der Heckscheibe, wobei der Scheibenwischerantrieb durch die auf das Außengewinde des Abtriebsdoms geschraubte Mutter in Richtung auf die Heckscheibe bzw. die Fahrzeugkarosserie gespannt wird. Dabei ist eine Ausführungsform realisierbar, bei der sich das Gehäuse unmittelbar an der Heckscheibe bzw. der Fahrzeugkarosserie von der Innenseite des Kraftfahrzeugs her abstützt oder über einen Abstützflansch, der auf den Abtriebsdom aufgeschoben ist.

Von besonderem Vorteil ist eine Ausführungsform des Kraftfahrzeugs, bei der sich die aus einem Elastomer ausgebildete Schutzkappe, vorzugsweise mit mindestens einer Dichtlippe, zusätzlich oder alternativ zu einer dichtenden Anlage an der Anlagescheibe, dichtend an der Fahrzeugkarosserie und/oder der Heckscheibe abstützt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. la:: eine unvollständige Darstellung eines an einer Heckscheibe festgelegten Scheibenwischerantriebs,
- Fig. 1b:: eine Detailvergrößerung aus Fig. la, die eine angeformte Dichtlippe zeigt, mit der eine Schutzkappe des Scheibenwischerantriebs dichtend an einer Anlagescheibe anliegt,
- Fig. 2:: ein alternatives Ausführungsbeispiel eines an einer Heckscheibe eines Kraftfahrzeuges festgelegten Scheibenwischerantriebs, bei dem die Schutzkappe einen an einer Befestigungsmutter ausgebildeten Hinterschnitt formschlüssig hintergreift, wobei strichliert eine alternative Ausführungsform angedeutet ist, und
- Fig. 3:: eine Gesamtdarstellung eines Scheibenwischerantriebes und einer Elastomer-Schutzkappe.

### Ausführungsformen der Erfindung

In den Figuren sind gleiche Bauteile und Bauteile mit der gleichen Funktion mit den gleichen Bezugszeichen gekennzeichnet.

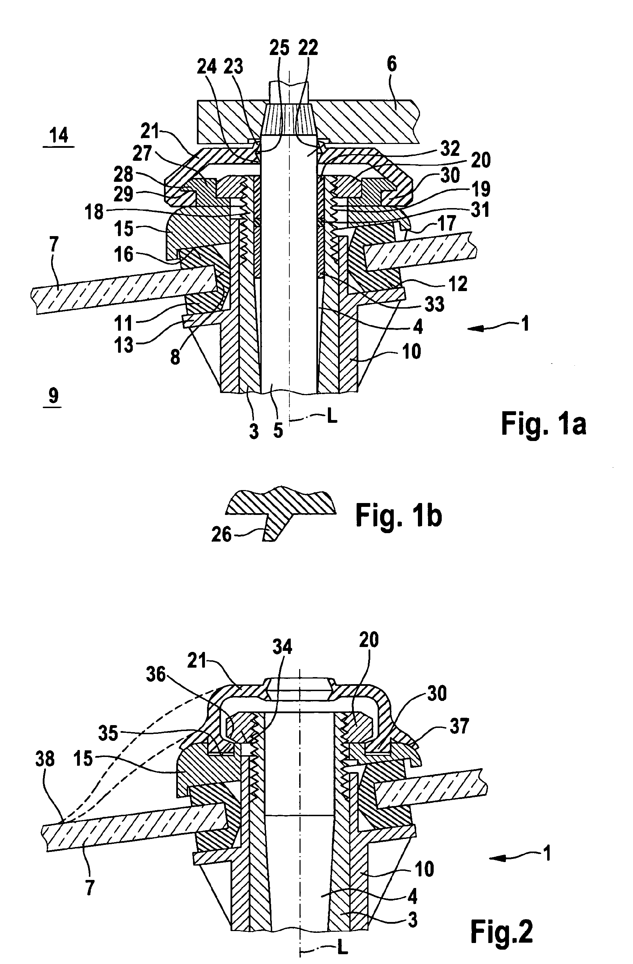

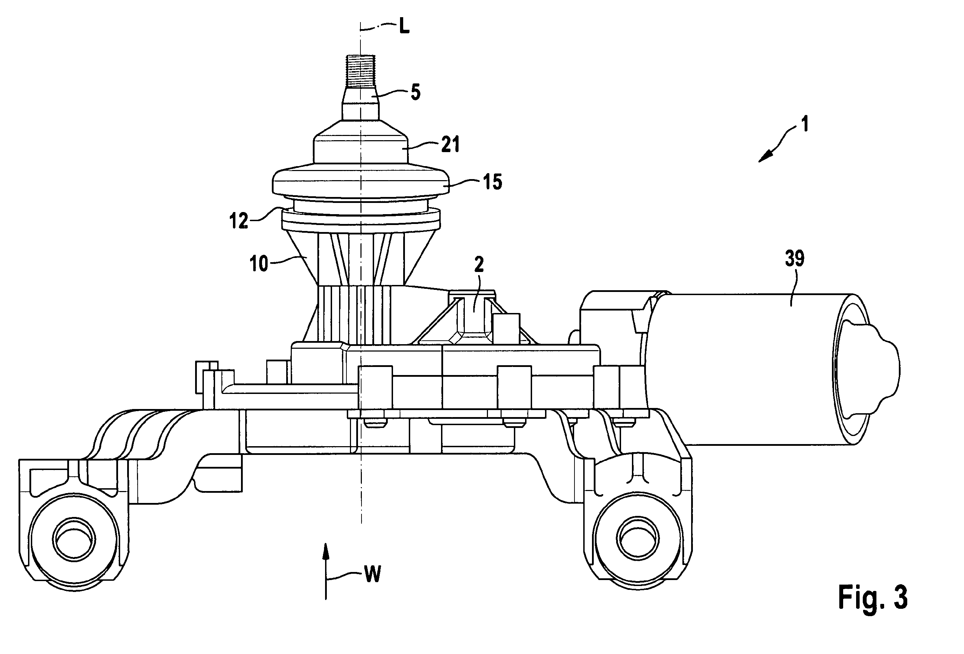

In Fig. la ist ausschnittsweise ein als Heckscheibenwischerantrieb ausgebildeter Scheibenwischerantrieb 1 gezeigt. Der Scheibenwischerantrieb 1 kann dabei wie in Fig. 3 gezeigt, ausgebildet sein. Dieser umfasst ein Gehäuse 2 mit einem angeformten Abtriebsdom 3, der eine zentrische Durchgangsöffnung 4 aufweist. Innerhalb des bis auf den Abtriebsdom 3 in Fig. 1 nicht weiter dargestellten Gehäuses 2 ist in an sich bekannter Weise ein, vorzugsweise als Schneckengetriebe ausgebildetes, Getriebe aufgenommen, das mit einem elektromotorischen Antrieb angetrieben ist. Mittels des nicht gezeigten Antriebsmotors sowie des ebenfalls nicht gezeigten Getriebes wird eine Wischerwelle 5, die die Durchgangsöffnung 4 des Abtriebsdoms 3 in axialer Richtung durchsetzt pendelnd um ihre Längsmittelachse L angetrieben.

Endseitig an der Wischerwelle 5 ist ein Wischerarm 6 drehfest festgelegt, der bei pendelnd angetriebener Wischerwelle 5 eine Heckscheibe 7 überstreicht.

In der Heckscheibe 7 ist eine Aufnahmeöffnung 8 vorgesehen, die von dem Abtriebsdom 3 des Gehäuses 2 in axialer Richtung durchsetzt ist. Auf der in einem Kraftfahrzeuginnenraum 9 zugewandten Seite der Heckscheibe 7 befindet sich ein Abstützflansch 10, der auf den sich in Richtung seines freien Endes 18 verjüngenden Abtriebsdom 3 aufgeschoben ist. Mit Hilfe des Abstützflansches 10 stützt sich das Gehäuse 2 in axialer Richtung an einer Ringdichtung 11 ab, die den Innenumfang 8 umgreifend angeordnet ist. Der Abstützflansch 10 weist hierzu eine ringförmige Abstützfläche 12 auf, die an einem Umfangsbund 13 des Abstützflansches 10 angeordnet ist. Bei einer alternativen, nicht gezeigten Ausführungsform, ist der Abstützflansch 10 einstückig mit dem Abtriebsdom 3 ausgebildet. Der Abtriebsflansch 10 durchsetzt koaxial zum Abtriebsdom 3 die Aufnahmeöffnung 8 in axialer Richtung.

Auf einer der Kraftfahrzeugumgebung 14 zugewandten Seite der Heckscheibe 7 befindet sich eine Anlagescheibe 15 aus Kunststoff, die sich in axialer Richtung an der Ringdichtung 11 mit einer stirnseitigen Anlagefläche 16 abstützt. Mit einem Umfangsrand 17 umgreift die Anlagescheibe 15 dabei die Ringdichtung 11 in axialer Richtung. Die Anlagescheibe 15 wiederum wird in axialer Richtung durchsetzt von dem Abtriebsdom 3, der im Bereich seines freien Endes 18 mit einem Außengewinde 19 versehen ist. Auf dieses Außengewinde 19 ist von der Außenseite her eine Mutter 20 aufgeschraubt, mit der die Anlagescheibe 15 auf die Ringdichtung 11 verspannt wird, wobei gleichzeitig der Abtriebsdom 3 den Abstützflansch 10 in axialer Richtung von dem Kraftfahrzeuginnenraum 9 her gegen die Ringdichtung 11 presst. Diese erhält hierdurch eine definierte Dichtungspressung, wodurch die Ringdichtung 11 dichtend radial innen am Außenumfang des Abstützflansches 10 anliegt.

In einem Bereich zwischen dem Wischerarm 6 und der Anlagescheibe 15 ist eine Schutzkappe 21 aus einem Elastomermaterial angeordnet. Eine zentrische Öffnung 22 der Schutzkappe 21 wird dabei in axialer Richtung von der Wischerwelle 5 durchsetzt. Die Schutzkappe 21 liegt im Bereich der Öffnung 22 mit zwei in axialer Richtung beabstandeten Dichtlippen 23, 24, die in radialer Richtung nach innen ragen an dem Außenumfang der Wischerwelle 5 an. Zwischen den Dichtlippen 23, 24 ist eine mit Schmierfett gefüllte Fettkammer 25 ausgebildet, wobei das Fettdepot die Reibung zwischen den Dichtlippen 23, 24 und der Wischerwelle 5 minimiert und gleichzeitig die Dichtwirkung optimiert. Die Schutzkappe 21 erstreckt sich in axialer Richtung bis zur Anlagescheibe 15, an der sie sich in axialer Richtung mittels einer in Fig. 1b gezeigten, umlaufenden flexiblen Dichtlippe 26 abstützt - also dichtend an der Anlagescheibe 15 anliegt. Um die Schutzkappe 21 gegen eine ungewollte Axialverstellung zu sichern, ist ein als ringförmiges Blechbiegeteil ausgebildetes Befestigungsteil 27 vorgesehen, das mit einem radial inneren Abschnitt axial zwischen der Mutter 20 und der Anlagescheibe 15 geklemmt ist. Eine radial äußere Umfangsschulter 28 des ringförmigen Befestigungsteils 27 bildet einen Hinterschnitt 29, der von einem radial nach innen weisenden Fixierabschnitt 30 der Schutzkappe 21 hintergriffen ist. Anders ausgedrückt, ragt der Fixierabschnitt 30 der Schutzkappe 21 in einen Bereich axial zwischen dem Befestigungsteil 27 und der Anlagescheibe 15.

Wie aus Fig. 1a weiter zu erkennen ist, ist in einem Bereich radial zwischen dem Innenumfang des Abtriebsdoms 3 in der Durchgangsöffnung 4 und dem Außenumfang der Wischerwelle 5 eine Ringdichtung 31 angeordnet. Diese ist sandwichartig zwischen einem in der Zeichnungsebene axial oben angeordneten Kunststoffhaltering 32, der in dem zwischen dem Abtriebsdom 3 und der Wischerwelle 5 gebildeten Ringraum eingepresst ist, und einer axial unten angeordneten Lagerbuchse 33 zur rotierbaren Lagerung der Wischerwelle 5 eingeschlossen.

In Fig. 2 ist eine alternative Ausführungsform eines Scheibenwischerantriebs 1 gezeigt. Der Aufbau und die Funktionsweise entspricht im Wesentlichen dem in Fig. la gezeigten und zuvor beschriebenen Aufbau. Zur Vermeidung von Wiederholungen wird im Folgenden im Wesentlichen nur auf die Unterschiede zu dem zuvor beschriebenen Ausführungsbeispiel eingegangen. Im Hinblick auf die Gemeinsamkeiten wird auf Fig. la und Fig. 1b sowie die voranstehende Figurenbeschreibung verwiesen.

Bei dem Ausführungsbeispiel gemäß Fig. 2 wurde auf die Darstellung der Wischerwelle 5 verzichtet. Zu erkennen ist lediglich die freie Durchgangsöffnung 4 innerhalb des Abtriebsdoms 3.

Bei dem Ausführungsbeispiel gemäß Fig. 2 wurde auf ein separates Befestigungsteil zum formschlüssigen Anbinden der Schutzkappe 21 verzichtet. Stattdessen ist in eine der Schutzkappe 21 zugewandte Stirnseite 34 der Anlagescheibe 15 eine Ringnut 35 eingebracht, die sich in radialer Richtung nach innen bis in einen Bereich axial unterhalb der Mutter 20 erstreckt. Auf diese Weise wird an der Mutter 20 ein Hinterschnitt 36 gebildet, der von einem nach radial innen ragenden Fixierabschnitt 30 der aus einem Elastomermaterial bestehenden Schutzkappe 21 hintergriffen wird. Anders ausgedrückt ragt die Schutzkappe 21 mit ihrem Fixierabschnitt 30 in radialer Richtung nach innen in einen Bereich axial zwischen der Mutter 20 und der Anlagescheibe 15 hinein.

Mit einem radial außerhalb des Fixierabschnittes 30 angeordneten Dichtabschnitt 37, an dem bei Bedarf eine in Fig. 1b gezeigte Dichtlippe angeformt sein kann, liegt die Schutzkappe 21 dichtend an der Anlagescheibe 15 an.

Zusätzlich oder alternativ kann sich die Schutzkappe 21, wie strichliert in der linken Zeichnungshälfte angedeutet ist, mit einem Dichtabschnitt 38, gegebenenfalls mit einer Dichtlippe, an der Heckscheibe 7 dichtend an. Bei dem mit dem Bezugzeichen 7 gekennzeichneten Bauteil kann es sich alternativ auch um die Fahrzeugkarosserie handeln.

In Fig. 3 ist ein Scheibenwischerantrieb 1 in einer Gesamtansicht gezeigt. Zu erkennen ist das als Getriebegehäuse ausgebildete Gehäuse 2, an dem ein Polgehäuse 39 eines elektrischen Antriebsmotors angeflanscht ist. Zu erkennen ist ferner der über den verdeckten Abtriebsdom geschobene Abstützflansch 10, der mit Axialabstand zur Anlagescheibe 15 angeordnet ist, wobei sich im montierten Zustand zwischen der Anlagescheibe 15 und der Abstützfläche 12 des Abstützflansches 10 entweder eine Heckscheibe oder eine heckseitige Fahrzeugkarosserie befindet.

Axial benachbart, d.h. oberhalb der Anlagescheibe 15 ist die Schutzkappe 21 aus einem Elastomermaterial angeordnet, die einerseits dichtend an der Anlagescheibe 15 und andererseits dichtend an der Wischerwelle 5 anliegt, wobei sich die Wischerwelle 5 im Betrieb des Scheibenwischerantriebs 1 relativ zu der dann feststehenden Schutzkappe 21 verdreht.

## Patentansprüche

1. Scheibenwischerantrieb, insbesondere Kraftfahrzeugheckscheibenwischerantrieb, umfassend ein Gehäuse (2) mit einem von einer Wischerwelle (5) durchsetzten und eine Anlagescheibe (15) durchsetzenden Abtriebsdom (3), der im Bereich seines freien Endes (18) ein Außengewinde (19) aufweist, auf das eine, innerhalb einer von der Wischerwelle (5) durchsetzten Schutzkappe (21) angeordnete, Mutter (20) zum Verspannen der Anlagescheibe (15) aufgeschraubt ist,
**dadurch gekennzeichnet,**
**dass** die Schutzkappe (21) aus einem Elastomermaterial ausgebildet ist.

2. Scheibenwischerantrieb nach Anspruch 1,
**dadurch gekennzeichnet,**
**dass** die Schutzkappe (21) dichtend an der Wischerwelle (5) anliegt.

3. Scheibenwischerantrieb nach einem der Ansprüche 1 oder 2,
**dadurch gekennzeichnet,**
**dass** radial zwischen der Schutzkappe (21) und der Wischerwelle (5) eine, vorzugsweise axial von mindestens zwei Dichtlippen (23, 24) begrenzte, Fettkammer (25) gebildet ist.

4. Scheibenwischerantrieb nach einem der vorhergehenden Ansprüche,
**dadurch gekennzeichnet,**
**dass** die Schutzkappe (21), vorzugsweise mittels mindestens einer Dichtlippe (26), dichtend an der Anlagescheibe (15) anliegt.

5. Scheibenwischerantrieb nach einem der vorhergehenden Ansprüche,
**dadurch gekennzeichnet,**
**dass** die Schutzkappe (21) in ihrer montierten Position formschlüssig gehalten ist.

6. Scheibenwischerantrieb nach einem der vorhergehenden Ansprüche,
**dadurch gekennzeichnet,**
**dass** in der Anlagescheibe (15) eine Ringnut (35) eingebracht ist, die in radialer Richtung nach innen bis in einen Bereich axial unter die Mutter (20) reicht, derart, dass axial zwischen der Mutter (20) und der Anlagescheibe (15) ein von der Schutzkappe (21) hintergriffener Hinterschnitt (36) gebildet ist.

7. Scheibenwischerantrieb nach einem der vorhergehenden Ansprüche,
**dadurch gekennzeichnet,**
**dass** die Schutzkappe (21) formschlüssig an einem Befestigungsteil (27), insbesondere in einem Hinterschnitt (29) gehalten ist, und dass das Befestigungsteil (27) klemmend zwischen der Mutter (20) und der Anlagescheibe (15) aufgenommen ist.

8. Scheibenwischerantrieb nach einem der vorhergehenden Ansprüchen,
**dadurch gekennzeichnet,**
**dass** das Befestigungsteil (27) ein Blechbiegeteil ist.

9. Kraftfahrzeug mit einem Scheibenwischerantrieb (1), insbesondere Kraftfahrzeugheckscheibenwischerantrieb, nach einem der vorhergehenden Ansprüche, wobei der Abtriebsdom (3) eine Fahrzeugkarosserie oder eine Heckscheibe (7) durchsetzend angeordnet ist.

10. Kraftfahrzeug nach Anspruch 9,
**dadurch gekennzeichnet,**
**dass** die Schutzkappe (21), vorzugsweise mit mindestens einer Dichtlippe, dichtend an der Fahrzeugkarosserie und/oder der Heckscheibe (7) anliegt.

## Claims

1. Windscreen wiper drive, in particular motor vehicle rear window wiper drive, comprising a housing (2) with an output dome (3) which is penetrated by a wiper shaft (5), penetrates a contact disc (15) and, in the region of its free end (18), has an external thread (19) onto which a nut (20) for bracing the contact disc (15) is screwed, the nut being arranged within a protective cap (21) penetrated by the wiper shaft (5), **characterized in that** the protective cap (21) is formed from an elastomer material.

2. Windscreen wiper drive according to Claim 1, **characterized in that** the protective cap (21) bears against the wiper shaft (5) in a sealing manner.

3. Windscreen wiper drive according to either of Claims 1 and 2, **characterized in that** a grease chamber (25), which is preferably delimited axially by at least two sealing lips (23, 24), is formed radially between the protective cap (21) and the wiper shaft (5).

4. Windscreen wiper drive according to one of the preceding claims, **characterized in that** the protective cap (21) bears against the contact disc (15) in a sealing manner, preferably by means of at least one sealing lip (26).

5. Windscreen wiper drive according to one of the preceding claims, **characterized in that** the protective cap (21) is retained in a form-fitting manner in the fitted position thereof.

6. Windscreen wiper drive according to one of the preceding claims, **characterized in that** an annular groove (35) is provided in the contact disc (15), the annular groove reaching inwards in the radial direction into a region axially below the nut (20) in such a manner that an undercut (36) behind which the protective cap (21) engages is formed axially between the nut (20) and the contact disc (15).

7. Windscreen wiper drive according to one of the preceding claims, **characterized in that** the protective cap (21) is retained in a form-fitting manner on a fastening part (27), in particular in an undercut (29), and **in that** the fastening part (27) is received between the nut (20) and the contact disc (15) in a clamping manner.

8. Windscreen wiper drive according to one of the preceding claims, **characterized in that** the fastening part (27) is a sheet-metal bent part.

9. Motor vehicle with a windscreen wiper drive (1), in particular motor vehicle rear window wiper drive, according to one of the preceding claims, wherein the output dome (3) is arranged in a manner penetrating a vehicle body or a rear window (7).

10. Motor vehicle according to Claim 9, **characterized in that** the protective cap (21) bears against the vehicle body and/or the rear window (7) in a sealing manner, preferably by means of at least one sealing lip.

## Revendications

1. Entraînement d'essuie-glace, en particulier entrainement d'essuie-glace de vitre arrière de véhicule automobile, comportant un boîtier (2) comprenant un dôme de sortie (3) qui est traversé par un arbre d'essuie-glace (5) et qui traverse un disque d'appui (15), lequel dôme de sortie comprend, dans la région de son extrémité libre (18), un filetage extérieur (19) sur lequel est vissé un écrou (20) disposé à l'intérieur d'un capuchon de protection (21) traversé par l'arbre d'essuie-glace (5), en vue du serrage du disque d'appui (15),
**caractérisé en ce**
**que** le capuchon de protection (21) est réalisé en un matériau élastomère.

2. Entraînement d'essuie-glace selon la revendication 1,
**caractérisé en ce**
**que** le capuchon de protection (21) s'applique hermétiquement contre l'arbre d'essuie-glace (5).

3. Entraînement d'essuie-glace selon la revendication 1 ou 2,
**caractérisé en ce**
**qu'**une chambre à graisse (25), de préférence délimitée axialement par au moins deux lèvres d'étanchéité (23, 24), est formée radialement entre le capuchon de protection (21) et l'arbre d'essuie-glace (5).

4. Entraînement d'essuie-glace selon l'une quelconque des revendications précédentes,
**caractérisé en ce**
**que** le capuchon de protection (21) s'applique hermétiquement contre le disque d'appui (15), de préférence au moyen d'au moins une lèvre d'étanchéité (26).

5. Entraînement d'essuie-glace selon l'une quelconque des revendications précédentes,
**caractérisé en ce**
**que** le capuchon de protection (21) est maintenu par engagement positif dans sa position montée.

6. Entraînement d'essuie-glace selon l'une quelconque des revendications précédentes,
**caractérisé en ce**
**qu'**une rainure annulaire (35) est ménagée dans le disque d'appui (15), laquelle s'étend dans la direction radiale vers l'intérieur jusqu'à une région axialement en dessous de l'écrou (20) de telle sorte qu'une contre-dépouille (36) engagée par l'arrière par le capuchon de protection (21) soit formée axialement entre l'écrou (20) et le disque d'appui (15).

7. Entraînement d'essuie-glace selon l'une quelconque des revendications précédentes,
**caractérisé en ce**
**que** le capuchon de protection (21) est maintenu par engagement positif contre une pièce de fixation (27), en particulier dans une contre-dépouille (29), et en ce que la pièce de fixation (27) est reçue de manière bloquée entre l'écrou (20) et le disque d'appui (15).

8. Entraînement d'essuie-glace selon l'une quelconque des revendications précédentes,
**caractérisé en ce**
**que** la pièce de fixation (27) est une pièce cintrée en tôle.

9. Véhicule automobile comprenant un entraînement d'essuie-glace (1), en particulier un entrainement d'essuie-glace de vitre arrière de véhicule automobile selon l'une quelconque des revendications précédentes, le dôme de sortie (3) étant disposé de manière à traverser une carrosserie de véhicule ou une vitre arrière (7).

10. Véhicule automobile selon la revendication 9,
**caractérisé en ce**
**que** le capuchon de protection (21), de préférence par l'intermédiaire d'une lèvre d'étanchéité, s'applique hermétiquement contre la carrosserie de véhicule et/ou la vitre arrière (7).
